# EUROPEAN PATENT APPLICATION

(11) **EP 2 439 222 A1**
(43) Date of publication of application: **11.04.2012**
(21) Application number: 10783139.8
(22) Date of filing: 01.06.2010
(51) Int. Cl.: C08G 59/08, C08J 5/24, C08K 5/3445, C08L 63/04

(54) **EPOXY RESIN COMPOSITION, PREPREG AND FIBER-REINFORCED COMPOSITE MATERIAL**

(30) Priority: 01.06.2009 JP 2009132226; 01.06.2009 JP 2009132227; 23.06.2009 JP 2009148204; 28.05.2010 JP 2010123147
(71) Applicant: Mitsubishi Rayon Co., Ltd., Minato-ku Tokyo 108-8506 (JP)
(72) Inventor: NOHARA, Atsushi, Toyohashi-shi Aichi 440-8601 (JP); KANEKO, Manabu, Toyohashi-shi Aichi 440-8601 (JP); TOMIOKA, Masao, Toyohashi-shi Aichi 440-8601 (JP)
(74) Representative: HOFFMANN EITLE
(86) International application number: PCT/JP2010/003667
(87) International publication number: WO 2010/140351

(57) **Abstract**

Provided is an epoxy resin composition having superior flame resistance without containing a halogen-based flame retardant, red phosphorous or phosphate ester, and a prepreg and a fiber-reinforced composite material that use the epoxy resin composition. The epoxy resin composition has as essential components thereof (A) a phosphorous-containing epoxy resin composed of a compound (a) represented by the following formula (a), (C) a novolak-type epoxy resin, and (D) an epoxy resin curing agent. A prepreg containing the epoxy resin composition and a fiber-reinforced composite material obtained by curing the prepreg are also provided.

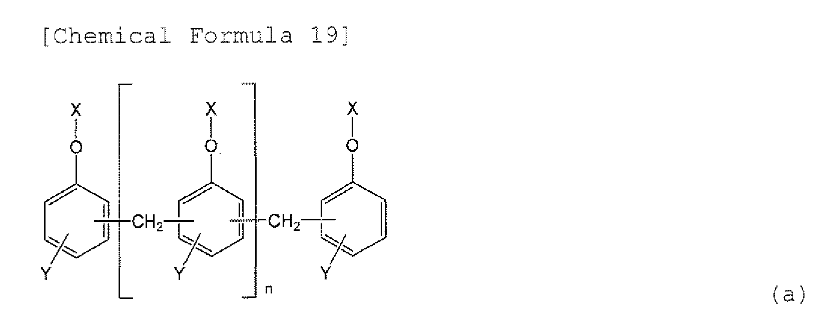

## Description

### TECHNICAL FIELD

This invention relates to an epoxy resin composition, a prepreg and a fiber-reinforced composite material.
The present application claims priority on the basis of Japanese Patent Application No. 2009-132226 filed in Japan on June 1, 2009, Japanese Patent Application No. 2009-132227 filed in Japan on June 1, 2009, Japanese Patent Application No. 2009-148204 filed in Japan on June 23, 2009, and Japanese Patent Application No. 2010-123147 filed in Japan on May 28, 2010, the contents of which are incorporated herein by reference.

### BACKGROUND ART

In the past, although a method in which a halogen-based flame retardant such as a brominated epoxy resin is blended into a matrix resin of a composite material has been widely used as a method for imparting flame resistance to a fiber-reinforced composite material, due to problems such as generation of gas during combustion, studies have been conducted on alternative technologies thereof and these alternative technologies have been employed.
A method in which a red phosphorous and phosphate ester compound are added to an epoxy resin (Patent Document 1) is primarily employed as a method for imparting flame resistance as an alternative to the use of brominated epoxy resin.
However, this method still has the problems indicated below:
1) decreased mechanical strength;
2) poor storage stability;
3) gradual seepage of the red phosphorous and phosphate ester compound over a long period of time; and
4) difficulty in application to printed wiring boards, electronic materials and the like requiring high levels of insulation properties and moisture resistance due to susceptibility of the red phosphorous and phosphate ester compound to hydrolysis.

### Prior Art Documents

### Patent Documents

Patent Document 1: International Publication No. WO 2005/082982

### SUMMARY OF THE INTENTION

### Problems to be Solved by the Invention

An object of the present invention is to provide an epoxy resin composition that provides a composite material having superior flame resistance without containing a halogen-based flame retardant, red phosphorous or phosphate ester compound, and a prepreg and a fiber-reinforced composite material that use the epoxy resin composition.

### Means for Solving the Problems

The present invention has the aspects indicated below to solve the aforementioned problems.
[1] An epoxy resin composition having as essential components thereof:
   (A) a phosphorous-containing epoxy resin composed of a compound (a) represented by the following formula (a),
   (C) a novolak-type epoxy resin, and
   (D) an epoxy resin curing agent:

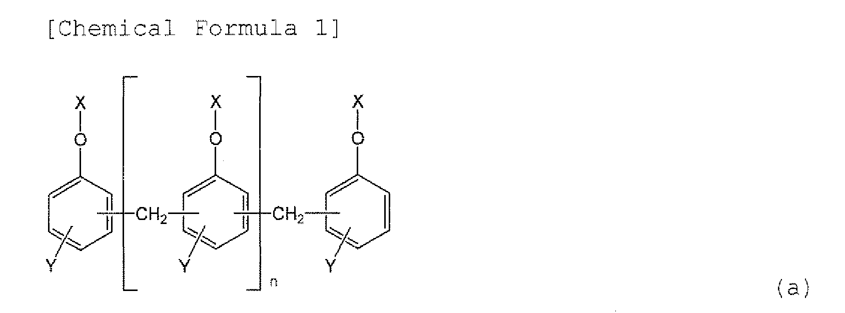

(wherein, n represents an integer of 1 or more, X represents a group represented by the following formula (I), (II) or (III), the Xs of (n+2) times in the formula may be the same or different, provided that at least one of all X in the epoxy resin composition is a group represented by the aforementioned formula (I) or (II) and at least one is a group represented by the aforementioned formula (III), Y represents -H or -CH₃, and the Ys of (n+2) times in the formula may be the same or different).

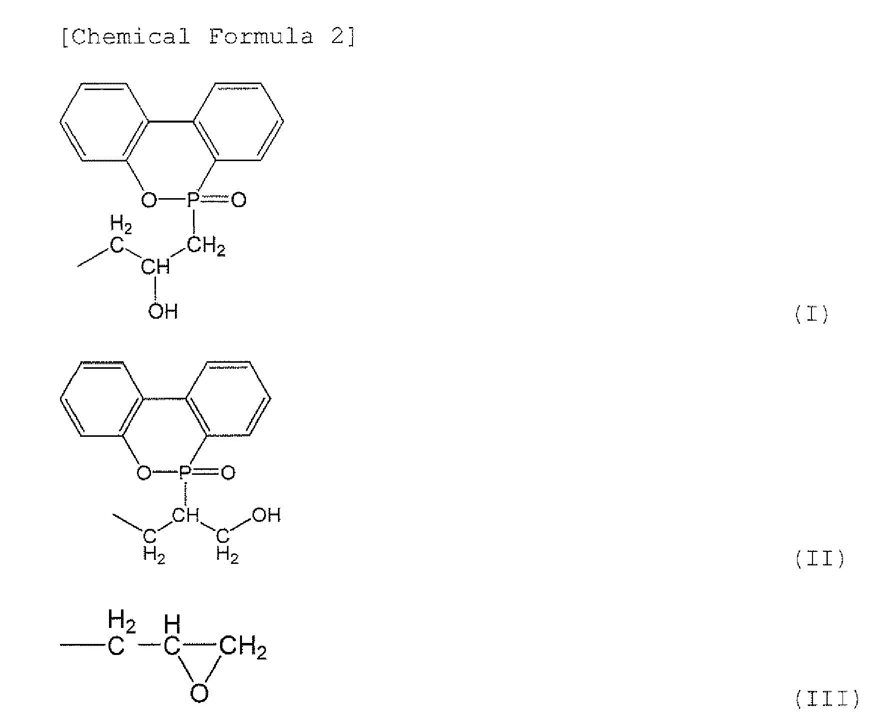

[2] An epoxy resin composition having as essential components thereof:
   (A) a phosphorous-containing epoxy resin composed of a compound (a) represented by the following formula (a),
   (B) a phosphorous-containing epoxy resin composed of a compound (b) represented by the following formula (b),
   (C) a novolak-type epoxy resin, and
   (D) an epoxy resin curing agent; wherein
   the mass ratio of (B) to (C) is 2:8 to 7:3:

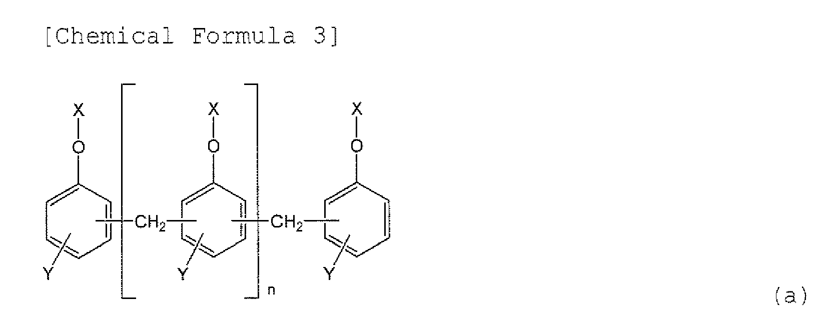

(wherein, n represents an integer of 1 or more, X represents a group represented by the following formula (I), (II) or (III), the Xs of (n+2) times in the formula may be the same or different, provided that at least one of all X in the epoxy resin composition is a group represented by the aforementioned formula (I) or (II) and at least one is a group represented by the aforementioned formula (III), Y represents -H or -CH₃, and the Ys of (n+2) times in the formula may be the same or different);

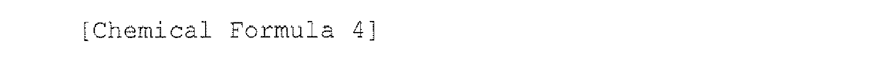

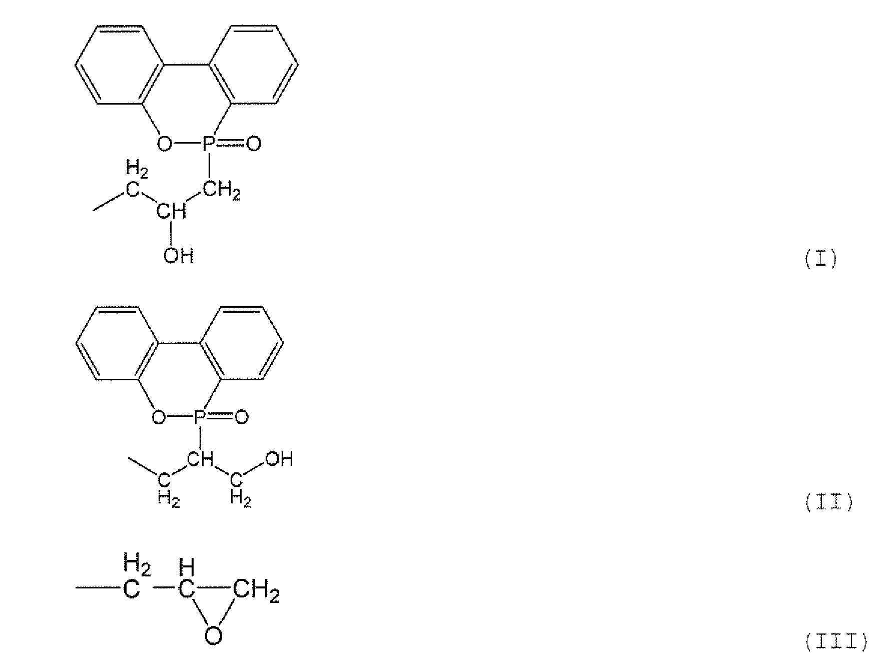

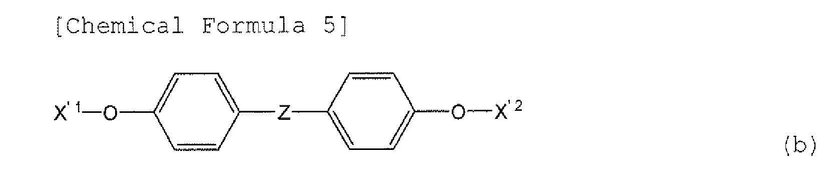

(wherein, X'¹ and X'² each independently represent a group represented by the aforementioned formula (I), (II) or (III), provided that at least one of all X'¹ and X'² in the epoxy resin composition is a group represented by the aforementioned formula (I) or (II) and at least one is a group represented by the aforementioned formula (III), and Z represents -CH₂-, -C(CH₃)₂- or -SO₂-).

[3] An epoxy resin composition having as essential components thereof:
   (A) a phosphorous-containing epoxy resin composed of a compound (a) represented by the following formula (a),
   (C) a novolak-type epoxy resin,
   (F) a trisphenolmethane-type epoxy resin, and
   (D) an epoxy resin curing agent:

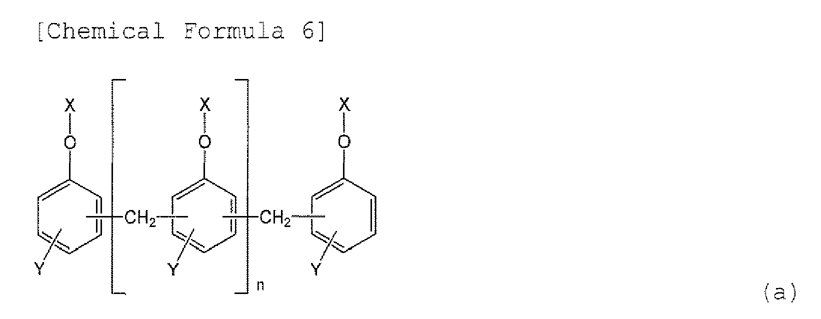

(wherein, n represents an integer of 1 or more, X represents a group represented by the following formula (I), (II) or (III), the Xs of (n+2) times in the formula may be the same or different, provided that at least one of all X in the epoxy resin composition is a group represented by the aforementioned formula (I) or (II) and at least one is a group represented by the aforementioned formula (III), Y represents -H or -CH₃, and the Ys of (n+2) times in the formula may be the same or different);

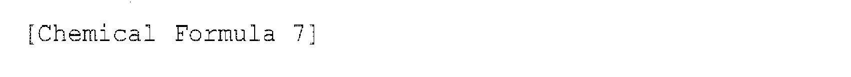

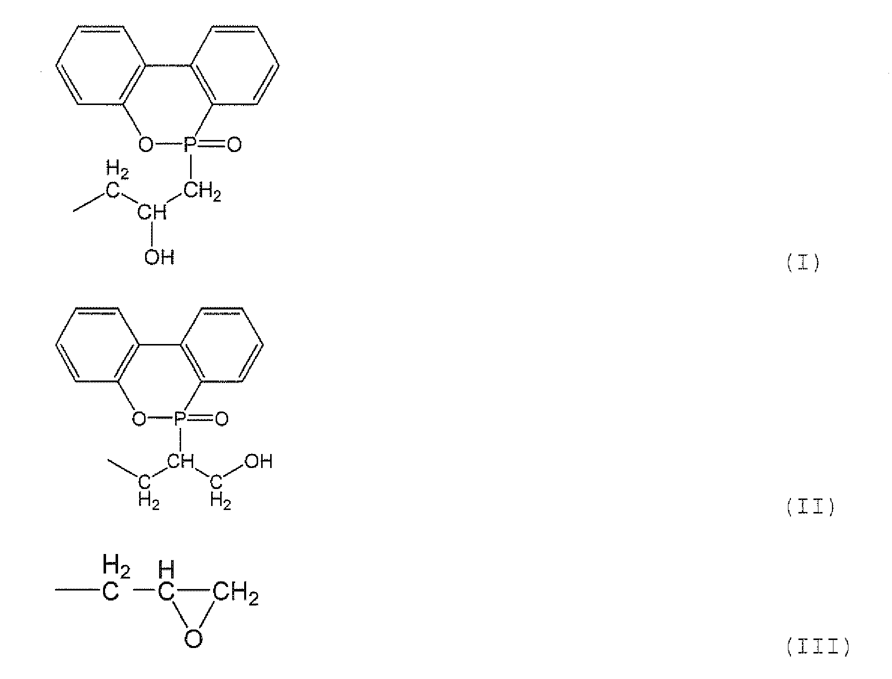

[4] The epoxy resin composition described in any one of [1] to [3] above, wherein the blended amount of the phosphorous-containing epoxy resin (A) is 10% by mass to 50% by mass based on the total mass of the epoxy resin composition.
[5] The epoxy resin composition described in [1] or [2] above, wherein the blended amount of the phosphorous-containing epoxy resin (A) is 19% by mass to 50% by mass based on the total mass of the epoxy resin composition.
[6] The epoxy resin composition described in [1] or [2] above, wherein the blended amount of the phosphorous-containing epoxy resin (A) is 19% by mass to 31% by mass based on the total mass of the epoxy resin composition.
[7] The epoxy resin composition described in [3] above, wherein the blended amount of the phosphorous-containing epoxy resin (A) is 15% by mass to 30% by mass based on the total mass of the epoxy resin composition.
[8] The epoxy resin composition described in [3] above, wherein the blended amount of the phosphorous-containing epoxy resin (A) is 17% by mass to 25% by mass based on the total mass of the epoxy resin composition.
[9] The epoxy resin composition described in [1] or [2] above, wherein the blended amount of the phosphorous-containing epoxy resin (A) is 35% by mass to 60% by mass based on a value of 100% for the total amount of other epoxy resin other than the phosphorous-containing epoxy resin (A) contained in the epoxy resin composition.
[10] The epoxy resin composition described in [3] above, wherein the blended amount of the phosphorous-containing epoxy resin (A) is 15% by mass to 40% by mass based on a value of 100% for the total amount of other epoxy resin other than the phosphorous-containing epoxy resin (A) contained in the epoxy resin composition.
[11] The epoxy resin composition described in [3] above, wherein the blended amount of the phosphorous-containing epoxy resin (A) is 17% by mass to 31% by mass based on a value of 100% for the total amount of other epoxy resin other than the phosphorous-containing epoxy resin (A) contained in the epoxy resin composition.
[12] A prepreg obtained by impregnating the epoxy resin composition described in any one of [1] to [11] above into a carbon fiber.
[13] A fiber-reinforced composite material obtained by curing a prepreg obtained by impregnating the epoxy resin composition described in any one of [1] to [11] above into a carbon fiber.
[14] A fiber-reinforced composite material obtained by curing a prepreg obtained by impregnating the epoxy resin composition described in any one of [1] to [11] above into a carbon fiber, wherein flame resistance when formed into a molded sheet having a thickness of 0.6 mm is V-0 in UL-94V.
[15] A fiber-reinforced composite material obtained by curing a prepreg obtained by impregnating the epoxy resin composition described in any one of [1] to [11] above into a carbon fiber, wherein flame resistance when formed into a resin sheet having a thickness of 2 mm is V-0 or V-1 in UL-94V.
[16] A fiber-reinforced composite material obtained by curing a prepreg obtained by impregnating the epoxy resin composition described in any one of [1] to [11] above into a carbon fiber, wherein flame resistance when formed into a resin sheet having a thickness of 2 mm is V-0 in UL-94V.

### Effects of the Invention

The epoxy resin composition, prepreg and fiber-reinforced composite material of the present invention have superior flame resistance without containing a halogen-based flame retardant, red phosphorous or phosphate ester compound.

### EMBODIMENT OF THE INTENTION

The following provides a detailed explanation of the present invention.

### <<First Embodiment of Epoxy Resin Composition>>

The epoxy resin composition of a first embodiment of the present invention has as essential components thereof the following phosphorous-containing epoxy resin (A), novolak-type epoxy resin (C), and epoxy resin curing agent (D).
In the present specification and claims, an "epoxy resins refers to a compound having one or more epoxy groups.

### <Phosphorous-Containing Epoxy Resin (A)>

The phosphorous-containing epoxy resin (A) is composed of a compound (a) represented by the following formula (a):

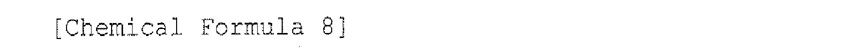

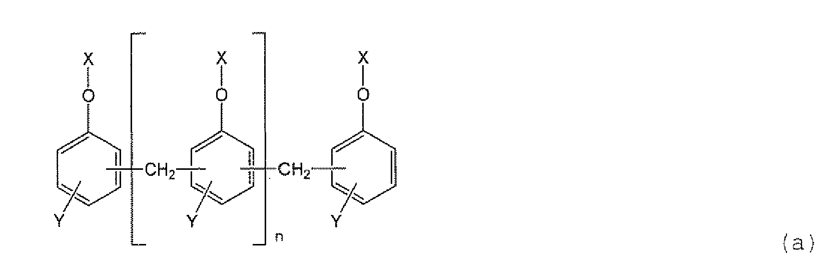

(wherein, n represents an integer of 1 or more, X represents a group represented by the following formula (I), (II) or (III), the Xs of (n+2) times in the formula may be the same or different, provided that at least one of all X in the epoxy resin composition is a group represented by the aforementioned formula (I) or (II) and at least one is a group represented by the aforementioned formula (III), Y represents -H or -CH₃, and the Ys of (n+2) times in the formula may be the same or different).

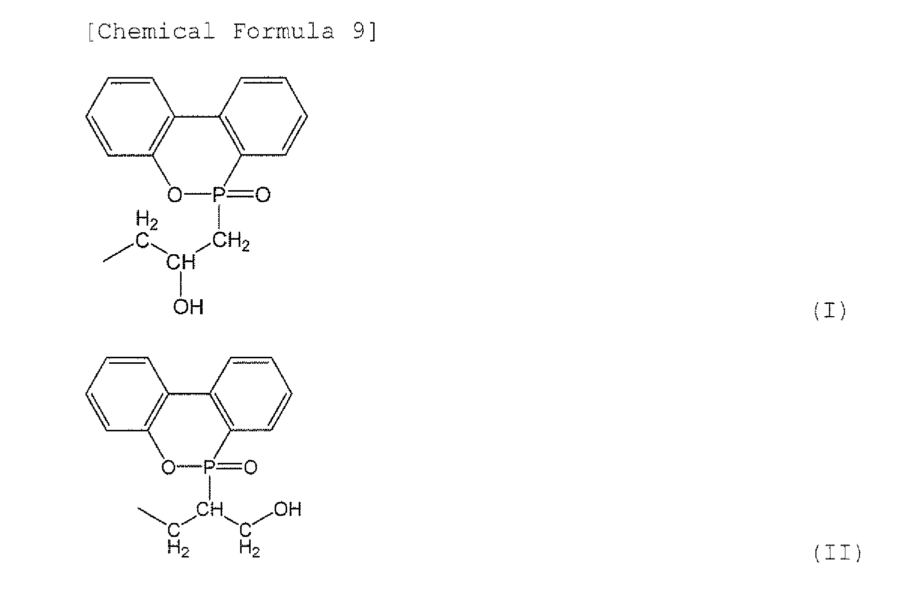

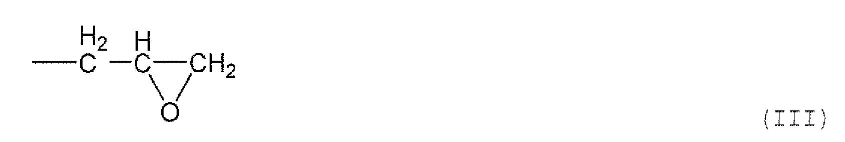

In formula (a), n represents an integer of 1 or more, preferably an integer of 1 to 10, and more preferably an integer of 1 to 5. If n is 10 or less, balance between heat resistance and fluidity is excellent.
The phosphorous-containing epoxy resin (A) may only be composed of a compound in which a portion of the Xs of (n+2) times in formula (a) is a group represented by the aforementioned formula (I) or (II) and a portion is a group represented by the aforementioned formula (III), or may be a mixture of a compound in which a portion or all of the Xs of (n+2) times in formula (a) is a group represented by the aforementioned formula (I) or (II), and a compound in which all are groups represented by the aforementioned formula (III).
The phosphorous content of the phosphorous-containing epoxy resin (A) is preferably 1% by mass to 8% by mass. The higher the phosphorous content, the greater the improvement in flame resistance of a cured product of the resulting resin composition. The lower the phosphorous content, the greater the improvement in heat resistance of the resulting resin composition.

A commercially available product or that synthesized according to a known production method may be used for the phosphorous-containing epoxy resin (A).
An example of a commercially available product is FX-289FA manufactured by Tohto Kasei Co., Ltd.
An example of a method for producing the phosphorous-containing epoxy resin (A) consists of reacting a compound represented by the following formula (c) (9,10-dihydro-9-oxa-10-phosphaphenanthrene-10-oxide (abbreviated as DOPO)) with an epoxy resin in which all of the Xs of (n+2) times in formula (a) are groups represented by formula (III) (such as a phenol novolak-type epoxy resin or cresol novolak-type epoxy resin) at a high temperature and in the presence of a catalyst. At this time, the amount of the DOPO used is an amount at which a portion of the epoxy groups in the epoxy resin of the raw material remain after the reaction.

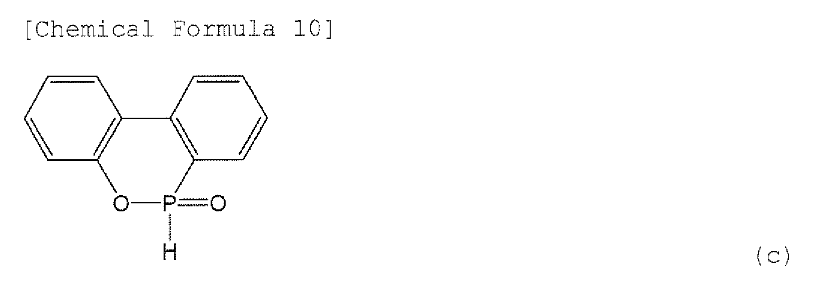

The phosphorous-containing epoxy resin (A) contained in the epoxy resin composition of the present embodiment may consist of one type or two or more types.
In the epoxy resin composition of the present embodiment, the blended amount of the phosphorous-containing epoxy resin (A) is preferably 10% by mass to 50% by mass, more preferably 15% by mass to 50% by mass, even more preferably 19% by mass to 50% by mass, and particularly preferably 19% by mass to 31% by mass based on the total mass of the epoxy resin composition. As a result of making the blended amount 10% by mass or more, the phosphorous content of the epoxy resin composition increases, thereby making it possible to impair adequate flame resistance. If the blended amount is 50% by mass or less, suitable viscosity and handling ease can be imparted to the epoxy resin composition.
The phosphorous content of the epoxy resin composition is preferably 0.5% by mass to 3% by mass and more preferably 1% by mass to 2.5% by mass.
In addition, in the epoxy resin composition of the present embodiment, the blended amount of the phosphorous-containing epoxy resin (A) is preferably 35% by mass to 60% by mass and more preferably 35% by mass to 50% by mass based on a value of 100% by mass for the total amount of other epoxy resin other than the phosphorous-containing epoxy resin (A) (such as the novolak-type epoxy resin (C) to be subsequently described or other epoxy resins) contained in the epoxy resin composition. If the blended amount is within these ranges, high levels of tenacity, heat resistance and flame resistance of a resin cured product can be respectively achieved.

### <Novolak-type Epoxy Resin (C)>

Although there are no particular limitations on the novolak-type epoxy resin (C) provided it does not contain phosphorous, it is preferably at least one type selected from phenol novolak-type epoxy resins and cresol novolak-type epoxy resins having superior flame resistance in terms of their chemical structure.
The novolak-type epoxy resin (C) contained in the epoxy resin composition of the present embodiment may consist of one type or two or more types.

### <Other Epoxy Resin (G)>

In addition to the aforementioned phosphorous-containing epoxy resin (A), novolak-type epoxy resin (C) and a phosphorous-containing epoxy resin (B) and trisphenolmethane-type epoxy resin (F) to be subsequently described, the epoxy resin composition of the present embodiment can contain other epoxy resin (G) as necessary within a range that does impair the effects of the present invention.
Examples of this epoxy resin (G) include bisphenol-type epoxy resin, glycidylamine-type epoxy resin, aminophenol-type epoxy resin, naphthalene-type epoxy resin and isocyanate-modified epoxy resin. One type of any one of these may be used alone or two or more types may be used in combination. In particular, bisphenol-type epoxy resin is preferable.

### <Epoxy Resin Curing Agent (D)>

A known curing agent of any structure can be used for the epoxy resin curing agent (D) provided it is able to cure epoxy resin. Specific examples thereof include amines, acid anhydrides, novolak resins, phenols, mercaptans, amine complexes of Lewis acids, onium salts and imidazoles. Among these, amine-based curing agents are preferable. Examples of amine-based curing agents that can be used include aromatic amines such as diaminodiphenylmethane or diaminodiphenylsulfone, aliphatic amines, imidazole derivatives, dicyandiamide, tetramethylguanidine and thiourea-amine adducts as well as isomers and transformation products thereof. Among these, dicyandiamide is particularly preferable due to its superior prepreg preservability.
In the epoxy resin composition of the present embodiment, the blended amount of the epoxy resin curing agent (D) is preferably such that the ratio of the active hydrogen equivalent of the epoxy resin curing agent (D) to the epoxy equivalent of the epoxy resin composition other than the epoxy resin curing agent (D) is 0.5 to 1. This ratio is more preferably 0.6 to 0.8. The epoxy resin composition of the present embodiment can be adequately cured by making the ratio 0.5 or more. Tenacity of a cured product can be enhanced by making the ratio 1 or less.

### <Curing Accelerator (E)>

The epoxy resin composition of the present embodiment may also contain a curing accelerator (E) as necessary within a range that does not impair the effects of the present invention. There are no particular limitations on the curing accelerator (E) provided it has the effect of accelerating the curing reaction by the epoxy resin curing agent (D) used. Preferable examples of such curing accelerator (E) in the case the epoxy curing agent (D) is dicyandiamide include urea derivatives such as 3-phenyl-1,1-dimethyLurea, 3-(3,4-dichlorophenyl)-1,1-dimethylurea (DCMU), 3-(3-chloro-4-methylphenyl)-1,1-dimethylurea and 2,4-bis(3,3-dimethylureido)toluene. In addition, tertiary amines are preferable in the case the epoxy resin curing agent (D) is an acid anhydride or novolak resin. In addition, imidazole compounds, urea compounds such as phenyldimethylurea (PDMU) and amine complexes such as trifluoride monoethylamine or trichloride amine complex are preferable in the case the epoxy resin curing agent (D) is diaminodiphenylsulfone. Among these, a combination of dicyandiamide and DCMU is particularly preferable.

### <Thermoplastic Resin>

The epoxy resin composition of the present embodiment may also contain a thermoplastic resin as necessary within a range that does not impair the effects of the present invention.
There are no particular limitations on the type of thermoplastic resin, and examples include polyamide, polyester, polycarbonate, polyethersulfone, polyphenylene ether, polyphenylene sulfide, polyether ether ketone, polyether ketone ketone, polyimide, polytetrafluoroethylene, polyether, polyolefin, liquid crystal polymer, polyarylate, polysulfone, polyacrylonitrile-styrene, polystyrene, polyacrylonitrile, polymethyl methacrylate, ABS, AES, ASA, polyvinyl chloride and polyvinyl formal. In particular, from the viewpoints of superior heat resistance and tenacity of a cured product, at least one type selected from polyethersulfone, polyether ether ketone and polyvinyl formal is used preferably.

### <Additives>

The epoxy resin composition of the present embodiment may also contain various known additives as necessary within a range that does not impair the effects of the invention. Examples of the additives that can be used include mold release agents such as silicone oil, natural waxes, synthetic waxes, metal salts of linear fatty acids, acid amides, esters or paraffin, inorganic fillers including powders such as crystalline silica, molten silica, calcium silicate, alumina, calcium carbonate, talc or barium sulfate as well as glass fiber and carbon fiber, colorants such as carbon black or red iron oxide, and silane coupling agents.

### <<Second Embodiment of Epoxy Resin Composition>>

The epoxy resin composition of a second embodiment of the present invention has as essential components thereof the following phosphorous-containing epoxy resin (A), phosphorous-containing resin (B), novolak-type epoxy resin (C) and epoxy resin curing agent (D), and the mass ratio of (B) to (C) is 2:8 to 7:3.

### <Phosphorous-Containing Epoxy Resin (A)>

Examples of the phosphorous-containing epoxy resin (A) used in the present embodiment are the same as those listed as examples of the phosphorous-containing epoxy resin (A) of the first embodiment.
The phosphorous-containing epoxy resin (A) contained in the epoxy resin composition of the present embodiment may consist of one type or two or more types.
In the epoxy resin composition of the present embodiment, the blended amount of the phosphorous-containing epoxy resin (A) is preferably 10% by mass to 50% by mass, more preferably 15% by mass to 50% by mass, even more preferably 19% by mass to 50% by mass, and particularly preferably 19% by mass to 31% by mass based on the total mass of the epoxy resin composition. As a result of making the blended amount 10% by mass or more, the phosphorous content of the epoxy resin composition increases, thereby making it possible to impair adequate flame resistance. If the blended amount is 50% by mass or less, suitable viscosity and handling ease can be imparted to the epoxy resin composition.
The phosphorous content of the epoxy resin composition is preferably 0.5% by mass to 3% by mass and more preferably 2% by mass to 2.8% by mass.
In addition, in the epoxy resin composition of the present embodiment, the blended amount of the phosphorous-containing epoxy resin (A) is preferably 35% by mass to 60% by mass and more preferably 35% by mass to 50% by mass based on a value of 100% by mass for the total amount of other epoxy resin other than the phosphorous-containing epoxy resin (A) (such as the phosphorous-containing epoxy resin (B) to be subsequently described, novolak-type epoxy resin (C) or other epoxy resin) contained in the epoxy resin composition. If the blended amount is within these ranges, high levels of tenacity, heat resistance and flame resistance of a resin cured product can be respectively achieved.

### <Phosphorous-Containing Epoxy Resin (B)>

The phosphorous-containing epoxy resin (B) is composed of a compound (b) represented by the following formula (b):

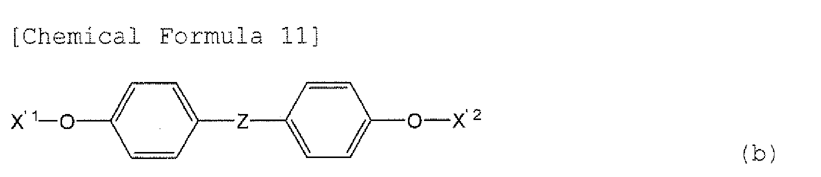

(wherein, X'¹ and X'² each independently represent a group represented by the aforementioned formula (I), (II) or (III), provided that at least one of all X'¹ and X'² in the epoxy resin composition is a group represented by the aforementioned formula (I) or (II) and at least one is a group represented by the aforementioned formula (III), and Z represents -CH₂-, -C(CH₃)₂- or -SO₂-).

The phosphorous-containing epoxy resin (B) may only be composed of a compound in which one of either X'¹ and X'² is a group represented by the aforementioned formula (I) or (II) and the other is a group represented by the aforementioned formula (III), or may be a mixture of a compound in which one or both of X'¹ and X'² is a group represented by the aforementioned formula (I) or (II), and a compound in which both are groups represented by the aforementioned formula (III).
A commercially available product or that synthesized according to a known production method may be used for the phosphorous-containing epoxy resin (B).
An example of a commercially available product is FX-289Z-1 manufactured by Tohto Kasei Co., Ltd.
An example of a method for producing the phosphorous-containing epoxy resin (B) consists of reacting a compound represented by the following formula (c) (DOPO) with an epoxy resin in which both X'¹ and X'² in formula (b) are groups represented by formula (III) (such as a bisphenol-type epoxy resin) at a high temperature and in the presence of a catalyst. At this time, the amount of the DOPO used is an amount at which a portion of the epoxy groups in the epoxy resin of the raw material remain after the reaction.

The phosphorous-containing epoxy resin (B) contained in the epoxy resin composition of the present embodiment may consist of one type or two or more types.
In the epoxy resin composition of the present embodiment, the blended amount of the phosphorous-containing epoxy resin (B) is an amount for which the mass ratio of the phosphorous-containing resin (B) to a novolak-type epoxy resin (C) to be subsequently described is within the range of 2:8 to 7:3. Suitable viscosity can be imparted to the epoxy resin composition by blending the phosphorous-containing epoxy resin (B) so that the aforementioned mass ratio is greater than 2:8. Conversely, a decrease in mechanical strength of a composite material obtained by molding the epoxy resin composition can be prevented by blending the phosphorous-containing epoxy resin (B) so that the aforementioned ratio is less than 7:3.

### <Novolak-type Epoxy Resin (C)>

Examples of the novolak-type epoxy resin (C) used in the present embodiment are the same as those listed as examples of the novolak-type epoxy resin (C) of the first embodiment.
The novolak-type epoxy resin (C) contained in the epoxy resin composition of the present embodiment may consist of one type or two or more types.

### <Other Epoxy Resin (G)>

In addition to the aforementioned phosphorous-containing epoxy resin (A), phosphorous-containing epoxy resin (B), novolak-type epoxy resin (C) and a trisphenolmethane-type epoxy resin (F) to be subsequently described, the epoxy resin composition of the present embodiment can contain other epoxy resin (G) as necessary within a range that does impair the effects of the present invention.
Examples of the other epoxy resin (G) are the same as those listed as examples of the other epoxy resin (G) of the first embodiment.

### <Epoxy Resin Curing Agent (D)>

Examples of the epoxy resin curing agent (D) are the same as those listed as examples of the epoxy resin curing agent (D) of the first embodiment.
In the epoxy resin composition of the present embodiment, the blended amount of the epoxy resin curing agent (D) is preferably such that the ratio of the active hydrogen equivalent of the epoxy resin curing agent (D) to the epoxy equivalent of the epoxy resin composition other than the epoxy resin curing agent (D) is 0.5 to 1. This ratio is more preferably 0.6 to 0. 8. The epoxy resin composition of the present embodiment can be adequately cured by making the ratio 0.5 or more. Tenacity of a cured product can be enhanced by making the ratio 1 or less.

### <Curing Accelerator (E)>

The epoxy resin composition of the present embodiment may also contain a curing accelerator (E) as necessary within a range that does not impair the effects of the present invention. Examples of the curing accelerator (E) are the same as those listed as examples of the curing accelerator (E) of the first embodiment.

### <Thermoplastic Resin>

The epoxy resin composition of the present embodiment may also contain a thermoplastic resin as necessary within a range that does not impair the effects of the present invention.
There are no particular limitations on the type of thermoplastic resin, and examples thereof are the same as those listed as examples of the thermoplastic resin of the first embodiment.

### <Additives>

The epoxy resin composition of the present embodiment may also contain various known additives as necessary within a range that does not impair the effects of the present invention. Examples of the additives are the same as those listed as examples of additives of the first embodiment.

### <<Third Embodiment of Epoxy Resin Composition>>

The epoxy resin composition of a third embodiment of the present invention has as essential components thereof the following phosphorous-containing epoxy resin (A), novolak-type epoxy resin (C), trisphenolmethane-type epoxy resin (F) and epoxy resin curing agent (D).

### <Phosphorous-Containing Epoxy Resin (A)>

Examples of the phosphorous-containing epoxy resin (A) used in the present embodiment are the same as those listed as examples of the phosphorous-containing epoxy resin (A) of the first embodiment.
The phosphorous-containing epoxy resin (A) contained in the epoxy resin composition of the present embodiment may consist of one type or two or more types.
In the epoxy resin composition of the present embodiment, the blended amount of the phosphorous-containing epoxy resin (A) is preferably 10% by mass to 50% by mass, more preferably 15% by mass to 50% by mass, even more preferably 15% by mass to 30% by mass, and particularly preferably 17% by mass to 25% by mass based on the total mass of the epoxy resin composition. As a result of making the blended amount 10% by mass or more, the phosphorous content of the epoxy resin composition increases, thereby making it possible to impair adequate flame resistance. If the blended amount is 50% by mass or less, suitable viscosity and handling ease can be imparted to the epoxy resin composition.
The phosphorous content of the epoxy resin composition is preferably 0.5% by mass to 3% by mass and more preferably 1% by mass to 2% by mass.
In addition, in the epoxy resin composition of the present embodiment, the blended amount of the phosphorous-containing epoxy resin (A) is preferably 15% by mass to 40% by mass and more preferably 17% by mass to 31% by mass based on a value of 100% by mass for the total amount of other epoxy resin other than the phosphorous-containing epoxy resin (A) (such as the novolak-type epoxy resin (C), trisphenolmethane-type epoxy rein or other epoxy resin to be subsequently described) contained in the epoxy resin composition. If the blended amount is within these ranges, high levels of tenacity, heat resistance and flame resistance of a resin cured product can be respectively achieved.

### <Novolak-type Epoxy Resin (C) >

Examples of the novolak-type epoxy resin (C) used in the present embodiment are the same as those listed as examples of the novolak-type epoxy resin (C) of the first embodiment.
The novolak-type epoxy resin (C) contained in the epoxy resin composition of the present embodiment may consist of one type or two or more types.

### <Trisphenolmethane-type Epoxy Resin (F)>

Examples of the trisphenolmethane-type epoxy resin (F) include a glycidyl ether of tris(hydroxyphenyl)methane.
The trisphenolmethane-type epoxy resin contained in the epoxy resin composition of the present embodiment may consist of one type or two or more types.

### <Other Epoxy Resin (G)>

In addition to the aforementioned phosphorous-containing epoxy resin (A), phosphorous-containing epoxy resin (B), novolak-type epoxy resin (C) and trisphenolmethane-type epoxy resin (F), the epoxy resin composition of the present embodiment can contain other epoxy resin (G) as necessary within a range that does impair the effects of the present invention. Examples of the other epoxy resin (G) are the same as those listed as examples of the other epoxy resin (G) of the first embodiment.

### <Epoxy Resin Curing Agent (D)>

Examples of the epoxy resin curing agent (D) are the same as those listed as examples of the epoxy resin curing agent (D) of the first embodiment.
In the epoxy resin composition of the present embodiment, the blended amount of the epoxy resin curing agent (D) is preferably such that the ratio of the active hydrogen equivalent of the epoxy resin curing agent (D) to the epoxy equivalent of the epoxy resin composition other than the epoxy resin curing agent (D) is 0.5 to 1. This ratio is more preferably 0.6 to 0.8. The epoxy resin composition of the present embodiment can be adequately cured by making the ratio 0.5 or more. Tenacity of a cured product can be enhanced by making the ratio 1 or less.

### <Curing Accelerator (E)>

The epoxy resin composition of the present embodiment may also contain a curing accelerator (E) as necessary within a range that does not impair the effects of the present invention. Examples of the curing accelerator (E) are the same as those listed as examples of the curing accelerator (E) of the first embodiment.

### <Thermoplastic Resin>

The epoxy resin composition of the present embodiment may also contain a thermoplastic resin as necessary within a range that does not impair the effects of the present invention.
There are no particular limitations on the type of thermoplastic resin, and examples thereof are the same as those listed as examples of the thermoplastic resin of the first embodiment.

### <Additives>

The epoxy resin composition of the present embodiment may also contain various known additives as necessary within a range that does not impair the effects of the present invention. Examples of the additives are the same as those listed as examples of additives of the first embodiment.

### <<Epoxy Resin Composition Preparation Method>>

The epoxy resin composition of the aforementioned first to third embodiments can be respectively prepared by mixing each of their components. Examples of methods used to mix each of the components include methods using a mixer such as a 3-roll mill, planetary mixer, kneader, universal stirrer, homogenizer or homodisper.

### <<Prepreg>>

The epoxy resin composition of the aforementioned first to third embodiments can be used as a prepreg by respectively impregnating in a reinforcing fiber.
Examples of reinforcing fibers that can be used include various types of inorganic fibers or organic fibers such as carbon fiber, aramid fiber, nylon fiber, high-strength polyester fiber, glass fiber, boron fiber, alumina fiber or silicon nitride fiber. Among these, carbon fiber, aramid fiber, glass fiber, boron fiber, alumina fiber and silicon nitride fiber are preferable from the viewpoint of flame resistance, while carbon fiber is particularly preferable from the viewpoints of specific strength and specific elasticity.
The form of the reinforced fiber may be such that the fibers are aligned in one direction, woven or in the form of a non-crimp fabric.
The prepreg can be produced according to a known method using the epoxy resin composition of the aforementioned first to third embodiments and the aforementioned reinforcing fiber.

### <<Fiber-Reinforced Composite Material>>

A fiber-reinforced composite material is obtained by curing the aforementioned prepreg.
In the present invention, the fiber-reinforced composite material is preferably a carbon fiber-reinforced composite material that contains carbon fiber for the reinforcing fiber.
According to the aforementioned carbon fiber-reinforced composite material, both superior flame resistance (such as flame resistance corresponding to V-0 of UL-94V when in the form of a molded sheet of a fiber-reinforced composite material having a thickness of 0.6 mm) and mechanical properties can be realized.

### Examples

The following provides a more detailed explanation of the present invention through examples thereof.
The following indicates raw materials (such as resin) and evaluation methods used in each of the following examples.

### <Raw Materials (such as Resin)>

The products listed in Table 1 were prepared for use as the phosphorous-containing epoxy resin (A), phosphorous-containing epoxy resin (B), novolak-type epoxy resin (C), trisphenolmethane-type epoxy resin (F), other epoxy resin (G), epoxy resin curing agent (D) and curing accelerator (E).

**[Table 1]**

| | Abbreviation | Manufacturer | Generic Name/Chemical Name | Product Name |
|---|---|---|---|---|
| Phosphorous-containing epoxy resin (A) | A-1 | Tohto Kasei Co., Ltd. | Phosphorous-containing epoxy resin | FX-289FA |
| Phosphorous-containing epoxy resin (B) | B-1 | Tohto Kasei Co., Ltd. | Phosphorous-containing epoxy resin | FX-2892-1 |
| Novolak-type epoxy resin (C) | C-1 | Japan Epoxy Resins Co., Ltd. | Liquid phenol novolak-type epoxy resin | jER152 |
| Navolak-type epoxy resin (C) | C-2 | DIC Corp. | Solid phenol novolak-type epoxy resin | N775 |
| Novolak-type epoxy resin (C) | C-3 | Tohto Kasei Co., Ltd. | Liquid phenol novolak-type epoxy resin | TX-0911 |
| Trisphenolmethane-type epoxy resin (F) | F-1 | Japan Epoxy Resins Co., Ltd. | Trisphenolmethane-type epoxy resin | jER1032H60 |
| Other epoxy resin (G) | G-1 | Japan Epoxy Resins Co., Ltd. | Liquid bisphenol A-type epoxy resin | jER828 |
| Epoxy resin curing agent (D) | D-1 | Japan Epoxy Resins Co., Ltd. | Dicyandiamide | DICY15 |
| Curing accelerator (E) | E-1 | Hodogaya Chemical Co., Ltd. | 3-(3,4-dichlorophenyl)-1,1-dimethylurea | DCMU99 |

Among the raw materials listed in Table 1, epoxy resins (R-1, B-1, C-1 to C-3, F-1 and G-1) were prepared respectively having the epoxy equivalents (g/eq) and phosphorous contents (% by mass) indicated below.
A-1: epoxy equivalent: 7740 g/eq, phosphorous content: 7.4% by mass
B-1: epoxy equivalent: 227 g/eq, phosphorous content: 2.0% by mass
C-1: epoxy equivalent: 177 g/eq, phosphorous content: 0% by mass
C-2: epoxy equivalent: 188 g/eq, phosphorous content: 0% by mass
C-3: epoxy equivalent: 172 g/eq, phosphorous content: 0% by mass
F-1: epoxy equivalent: 169 g/eq, phosphorous content: 0% by mass
G-1: epoxy equivalent: 189 g/eq, phosphorous content: 0% by mass
In addition, the active hydrogen equivalent of D-1 was calculated as 21 g/eq from the number of hydrogens in the molecular formula and the molecular mass.

### <Evaluation>

### (1) Measurement of Glass Transition Temperature (Tg):

The AREA-RDS manufactured by TA Instruments Japan Inc. was used for the measuring instrument.
A resin sheet having a thickness of 2 mm was formed into a test piece (length: 55 mm × width: 12.7 mm), storage elastic modulus G' was logarithmically plotted versus temperature at a measuring frequency of 1 Hz and heating rate of 5°C/min, and the temperature determined from the intersection of an approximate straight line of the flat region of log G' and an approximate straight line of the region in which G' changes was recorded as glass transition temperature (G'-Tg).

### (2) Measurement of Resin Sheet Bending Properties:

A resin sheet having a thickness of 2 mm was formed into a test piece (length: 60 mm × width: 8 mm), and bending properties (bending strength, bending elastic modulus, elongation at maximum load and rupture elongation) were measured under the condition of a crosshead speed of 2 mm/min using a universal tester manufactured by Instron Corp. equipped with a 3-point bending jig (3.2 mmR for both probe and supports, distance between supports: 32 mm).

### (3) UL-94V Combustion Test (Resin Sheet):

A resin sheet having a thickness of 2 mm was formed into a test piece (length: 127 mm × width: 12.7 mm), and a combustion test was carried out in accordance with the provisions of UL-94V using a combustion tester manufactured by Suga Test Instruments Co., Ltd. Total combustion time (seconds) and evaluation result (V-0, V-1 or V-2) were recorded.

### (4) UL-94V Combustion Test (Carbon Fiber Composite

### Material Sheet):

A carbon fiber composite material sheet having a thickness of 0.6 mm ([0/90]s) was formed into a test piece (length: 127 mm × width: 12.7 mm), and a combustion test was carried out in accordance with the provisions of UL-94V using a combustion tester manufactured by Suga Test Instruments Co., Ltd. Total combustion time (seconds) and evaluation result (V-0, V-1 or V-2) were recorded.

### (Example 1)

17.5 parts by mass of C-1, 7.5 parts by mass of D-1 and 5 parts by mass of E-1 were weighed into a container, stirred and mixed. This was then additionally finely mixed with a 3-roll mill to obtain a curing agent master batch.
60 parts by mass of A-1 and 82.5 parts by mass of C-1 were weighed into a flask followed by melting and mixing by heating to 150°C using an oil bath. After cooling to about 60°C, the aforementioned curing agent master batch was then stirred and mixed therewith to obtain an epoxy resin composition.

The resulting epoxy resin composition was injected between two glass plates interposed between polytetrafluoroethylene spacers having a thickness of 2 mm followed by heating and curing under curing conditions of 130°C × 2 hours and a heating rate of 2°C/min to obtain a resin sheet having a thickness of 2 mm.

The resulting epoxy resin composition was formed into a film with an M-500 Comma Coater manufactured by Hirano Tecseed Co., Ltd. to produce a resin film of 40 g/m². A carbon fiber prepreg having a fiber density of 150 g/m² and resin content of 35% by mass was obtained by drum winding using this resin film and TR50S15L carbon fiber manufactured by Mitsubishi Rayon Co., Ltd.
The resulting carbon fiber prepreg was cut to a size of 200 mm × 200 mm and four pieces thereof were superimposed so that fiber direction was [0°/90°]s = 0°/90°/90°/0°, followed by curing in an autoclave under conditions of 130°C × 90 minutes, heating rate of 2°C/min and pressure of 0. 6 MPa to obtain a carbon fiber composite material sheet ([0/90s]) having a thickness of 0.6 mm.

The aforementioned (1) measurement of glass transition temperature Tg, (2) measurement of resin sheet bending properties, (3) UL-94V combustion test (resin sheet) and (4) UL-94V combustion test (carbon fiber composite material sheet) were then carried out on the resulting resin sheet and carbon fiber composite material sheet. The results are shown in Table 2.

### (Examples 2 and 3)

Epoxy resin compositions were prepared in the same manner as Example 1 with the exception of changing the component ratios as shown in Table 2. Production of the resin sheet, production of the prepreg, production of the carbon fiber composite material sheet and evaluations thereof were carried out in the same manner as Example 1. The evaluation results are also shown in Table 2.

### (Example 4)

17.5 parts by mass of C-1, 7.5 parts by mass of D-1 and 5 parts by mass of E-1 were weighed into a container, stirred and mixed. This was then additionally finely mixed with a 3-roll mill to obtain a curing agent master batch.
50 parts by mass of A-1, 67.5 parts by mass of C-1 and 15 parts by mass of G-1 were weighed into a flask followed by melting and mixing by heating to 150°C using an oil bath. After cooling to about 60°C, the aforementioned curing agent master batch was then stirred and mixed therewith to obtain an epoxy resin composition. Production of the resin sheet, production of the prepreg, production of the carbon fiber composite material sheet and evaluations thereof were carried out in the same manner as Example 1. The evaluation results are also shown in Table 2.

### (Example 5)

An epoxy resin composition was obtained in the same manner as Example 4 with the exception of changing C-1 to C-3 and changing the component ratios as shown in Table 2. Production of the resin sheet, production of the prepreg, production of the carbon fiber composite material sheet and evaluations thereof were carried out in the same manner as Example 1. The evaluation results are also shown in Table 2.

### (Example 6)

17.5 parts by mass of C-3, 7.5 parts by mass of D-1 and 5 parts by mass of E-1 were weighed into a container, stirred and mixed. This was then additionally finely mixed with a 3-roll mill to obtain a curing agent master batch.
32 parts by mass of A-1, 50. 5 parts by mass of C-3, 17 parts by mass of F-1 and 15 parts by mass of G-1 were weighed into a flask followed by melting and mixing by heating to 150°C using an oil bath. After cooling to about 60°C, the aforementioned curing agent master batch was then stirred and mixed therewith to obtain an epoxy resin composition. Production of the resin sheet, production of the prepreg, production of the carbon fiber composite material sheet and evaluations thereof were carried out in the same manner as Example 1. The evaluation results are also shown in Table 2.

### (Examples 7 and 8)

Epoxy resin compositions were obtained in the same manner as Example 6 with the exception of changing the component ratio as shown in Table 2. Production of the resin sheet, production of the prepreg, production of the carbon fiber composite material sheet and evaluations thereof were carried out in the same manner as Example 1. The evaluation results are also shown in Table 2.
Among these, although the resin sheet of Example 8 satisfied the provisions of V-0 with respect to combustion time, since the maximum combustion time among the respective combustion times of 5 testpieces was 12 seconds, this resin sheet was evaluated as V-1. The asterisk (*) in Table 2 (max.: 12 seconds) indicates that the maximum combustion time was 12 seconds.

### (Example 9)

17.5 parts by mass of C-1, 7.5 parts by mass of D-1 and 5 parts by mass of E-1 were weighed into a container, stirred and mixed. This was then additionally finely mixed with a 3-roll mill to obtain a curing agent master batch.
35 parts by mass of A-1, 50 parts by mass of B-1, 10 parts by mass of C-1 and 22.5 parts by mass of C-2 were weighed into a flask followed by melting and mixing by heating to 150°C using an oil bath. After cooling to about 60°C, the aforementioned curing agent master batch was then stirred and mixed therewith to obtain an epoxy resin composition.

The resulting epoxy resin composition was injected between two glass plates interposed between polytetrafluoroethylene spacers having a thickness of 2 mm followed by heating and curing under curing conditions of 130°C × 2 hours and a heating rate of 2°C/min to obtain a resin sheet having a thickness of 2 mm.

The resulting epoxy resin composition was formed into a film with an M-500 Comma Coater manufactured by Hirano Tecseed Co., Ltd. to produce a resin film of 40 g/m². A carbon fiber prepreg having a fiber density of 150 g/m² and resin content of 35% by mass was obtained by drum winding using this resin film and TR50S15L carbon fiber manufactured by Mitsubishi Rayon Co., Ltd.
The resulting carbon fiber prepreg was cut to a size of 200 mm × 200 mm and four pieces thereof were superimposed so that fiber direction was [0°/90°] s = 0°/90°/90°/0°, followed by curing in an autoclave under conditions of 130°C × 90 minutes, heating rate of 2°C/min and pressure of 0.6 MPa to obtain a carbon fiber composite material sheet ([0/90s]) having a thickness of 0.6 mm.

The aforementioned (1) measurement of glass transition temperature Tg, (2) measurement of resin sheet bending properties, (3) UL-94V combustion test (resin sheet) and (4) UL-94V combustion test (carbon fiber composite material sheet) were then carried out on the resulting resin sheet and carbon fiber composite material sheet. The results are shown in Table 3.

### (Example 10)

12.5 parts by mass of C-1, 5 parts by mass of G-1, 7.5 parts by mass of D-1 and 5 parts by mass of E-1 were weighed into a container, stirred and mixed. This was then additionally finely mixed with a 3-roll mill to obtain a curing agent master batch.
35 parts by mass of A-1, 50 parts by mass of B-1, 22.5 parts by mass of C-2 and 10 parts by mass of G-1 were weighed into a flask followed by melting and mixing by heating to 150°C using an oil bath. After cooling to about 60°C, the aforementioned curing agent master batch was then stirred and mixed therewith to obtain an epoxy resin composition. Production of the resin sheet, production of the prepreg, production of the carbon fiber composite material sheet and evaluations thereof were carried out in the same manner as Example 9. The evaluation results are also shown in Table 3.

### (Examples 11 to 13)

Epoxy resin compositions were prepared in the same manner as Example 9 with the exception of changing the component ratios as shown in Table 3. Production of the resin sheet, production of the prepreg, production of the carbon fiber composite material sheet and evaluations thereof were carried out in the same manner as Example 9. The evaluation results are also shown in Table 3.

### (Comparative Examples 1 to 3)

Epoxy resin compositions were prepared in the same manner as Example 9 with the exception of changing the component ratios as shown in Table 3. However, the mixing temperature was 90°C for the composition not containing A-1. Production of the resin sheet, production of the prepreg, production of the carbon fiber composite material sheet and evaluations thereof were carried out in the same manner as Example 9. The evaluation results are also shown in Table 3.

### (Comparative Example 4)

17.5 parts by mass of B-1, 7.5 parts by mass of D-1 and 5 parts by mass of E-1 were weighed into a container, stirred and mixed. This was then additionally finely mixed with a 3-roll mill to obtain a curing agent master batch.
35 parts by mass of A-1 and 82.5 parts by mass of B-1 were weighed into a flask followed by melting and mixing by heating to 150°C using an oil bath. After cooling to about 60°C, the aforementioned curing agent master batch was then stirred and mixed therewith to obtain an epoxy resin composition.
Production of the resin sheet, production of the prepreg, production of the carbon fiber composite material sheet and evaluations thereof were carried out in the same manner as Example 9. The evaluation results are also shown in Table 3.

**[Table 2]**

| Components | Ex.1 | Vex.2 | Ex.3 | Ex.4 | Ex.5 | Ex.6 | Ex.7 | Ex.8 |
|---|---|---|---|---|---|---|---|---|
| A-1 | 60 | 50 | 35 | 50 | 40 | 32 | 25.6 | 19.2 |
| B-1 | | | | | | | | |
| C-1 | 100 | 100 | 100 | 85 | | | | |
| C-2 | | | | | | | | |
| C-3 | | | | | 85 | 68 | 54.4 | 40.8 |
| F-1 | | | | | | 17 | 30.6 | 44.2 |
| G-1 | | | | 15 | 15 | 15 | 15 | 15 |
| D-1 | 7.5 | 7.5 | 7.5 | 7.5 | 7.5 | 7.5 | 7.5 | 7.5 |
| E-1 | 5 | 5 | 5 | 5 | 5 | 5 | 5 | 5 |
| Ratio of active hydrogen equivalent to epoxy equivalent | 0.62 | 0.62 | 0.63 | 0.63 | 0.62 | 0.62 | 0.62 | 0.62 |
| Phosphorous content (wt%) | 2.5 | 2.2 | 1.7 | 1.9 | 1.9 | 1.6 | 1.4 | 1.1 |
| Bending strength [MPa] | 197 | 205 | 195 | 203 | 184 | 194 | 198 | 160 |
| Bending elastic modulus [GPa] | 4.1 | 4.2 | 3.9 | 4.2 | 4.0 | 3.9 | 4.0 | 3.9 |
| Elongation at max. load [%] | 5.9 | 6.6 | 6.9 | 7.1 | 5.9 | 7.2 | 7.0 | 4.6 |
| Rupture elongation [%] | 5.9 | 7.2 | 8.3 | 7.9 | | 6.4 7.5 | 7.0 | 4.6 |
| Resin sheet G'-Tg (°C) | 110 | 116 | 124 | 115 | 129 | 137 | 143 | 151 |
| UL-94V combustion test (2 mm resin sheet) | | | | | | | | |
| Top row: total combustion time [sec] | 5 | 8 | 18 | 9 | 5 | 1 | 6 | 37 |
| Lower row: Evaluation | V-0 | V-0 | V-0 | V-0 | V-0 | V-0 | V-0 | V-1^{*} |
| UL-94V combustion test (carbon fiber composite material sheet) | | | | | | | | |
| Top row: total combustion time [sec] | 19 | 23 | 21 | -- | -- | -- | -- | -- |
| Lower row: Evaluation | V-0 | V-0 | V-0 | | | | | |

| | | | | | | | | |
|---|---|---|---|---|---|---|---|---|
| *: Max: 12 seconds | | | | | | | | |

**[Table 3]**

| Components | Ex.9 | Ex.10 | Ex.11 | Ex.12 | Ex.13 | Comp. Ex.1 | Comp. Ex.2 | Comp. Ex.3 | Comp, Ex.4 |
|---|---|---|---|---|---|---|---|---|---|
| A-1 | 35 | 35 | 35 | 35 | 35 | | | 35 | 35 |
| B-1 | 50 | 50 | 20 | 35 | 70 | | 50 | 100 | 100 |
| C-1 | 27.5 | 12.5 | 80 | 65 | 30 | 50 | 17.5 | 17.5 | |
| C-2 | 22.5 | 22.5 | | | | 50 | 32.5 | | |
| C-3 | | | | | | | | | |
| F-1 | | | | | | | | | |
| G-1 | | 15 | | | | | | | |
| D-1 | 7.5 | 7.5 | 7.5 | 7.5 | 7.5 | 7.5 | 7.5 | 7.5 | 7.5 |
| E-1 | 5 | 5 | 5 | 5 | 5 | 5 | 5 | 5 | 5 |
| Ratio of active hydrogen equivalent to epoxy equivalent | 0.71 | 0.72 | 0.66 | 0.68 | 0.74 | 0.65 | 0.73 | 0.66 | 0.80 |
| Phosphorous content (wt%) | 2.4 | 2.4 | 2.0 | 2.2 | 2.7 | 0.0 | 0.9 | 2.8 | 3.1 |
| Bending strength [MPa] | 177 | 158 | 193 | 181 | 169 | 170 | 185 | 149 | 126 |
| Bending plastic modulus [GPa] | 4.3 | 4.1 | 4.0 | 4.1 | 4.0 | 3.5 | 3.9 | 4.0 | 4.3 |
| Elongation at max. load [%] | 5.1 | 3.4 | 6.6 | 5.1 | 4.6 | 6.6 | 5.7 | 3.9 | 2.9 |
| Rupture elongation [%] | 5.1 | 3.4 | 7.1 | 5.1 | 4.6 | 6.6 | 5.7 | 3.9 | 2.9 |
| Resin sheet G'-Tg (°C) | 108 | 97 | 104 | 102 | 95 | 145 | 127 | 78 | 98 |
| UL-94V combustion test (2 mm resin sheet) | | | | | | | | | |
| Top row: total combustion time [sec] | 0 | 12 | 13 | 14 | 8 | Fail | Fail | 10 | 0 |
| Lower row: Evaluation | V-0 | V-0 | V-0 | V-0 | V-0 | | | V-0 | V-0 |
| UL-94V combustion test (carbon fiber composite material sheet) | | | | | | | | | |
| Top row: total combustion time [sec] | 13 | 19 | -- | -- | -- | -- | -- | -- | -- |
| Lower row: Evaluation | V-0 | V-0 | | | | | | | |

### INDUSTRIAL APPLICABILITY

According to the epoxy resin composition of the present invention and a prepreg using the aforementioned epoxy resin composition, a composite material can be provided that has superior flame resistance without containing a halogen-based flame retardant, red phosphorous or phosphate ester.
According to the fiber-reinforced composite material of the present invention, both superior flame resistance (such as flame resistance corresponding to V-0 of UL-94V when in the form of a molded sheet of a fiber-reinforced composite material having a thickness of 0.6mm) and mechanical properties can be realized.

## Claims

1. An epoxy resin composition comprising as essential components thereof:
(A) a phosphorous-containing epoxy resin composed of a compound (a) represented by a following formula (a),
(C) a novolak-type epoxy resin, and
(D) an epoxy resin curing agent: 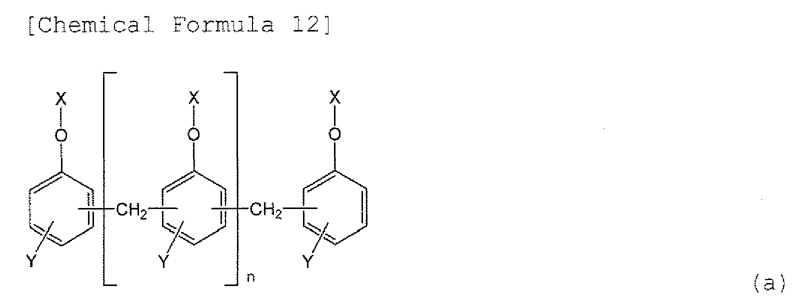 (wherein, n represents an integer of 1 or more, X represents a group represented by a following formula (I), (II) or (III), the Xs of (n+2) times in a formula may be the same or different, provided that at least one of all X in the epoxy resin composition is a group represented by the aforementioned formula (I) or (II) and at least one is a group represented by the aforementioned formula (III), Y represents -H or -CH₃, and the Ys of (n+2) times in a formula may be the same or different).

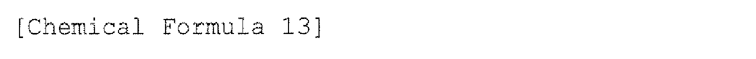

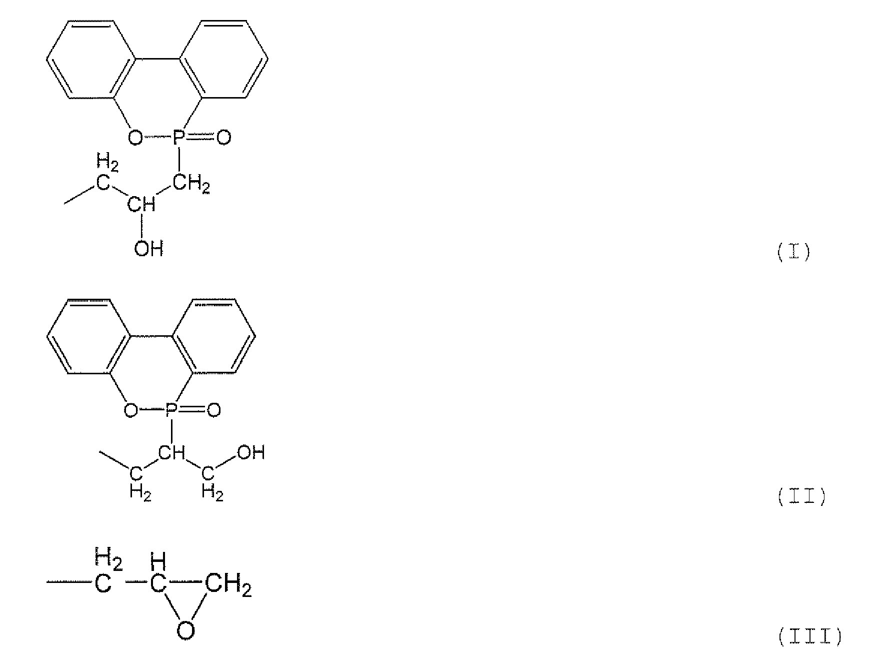

2. An epoxy resin composition comprising as essential components thereof:
(A) a phosphorous-containing epoxy resin composed of a compound (a) represented by a following formula (a),
(B) a phosphorous-containing epoxy resin composed of a compound (b) represented by a following formula (b),
(C) a novolak-type epoxy resin, and
(D) an epoxy resin curing agent; wherein
a mass ratio of (B) to (C) is 2:8 to 7:3: 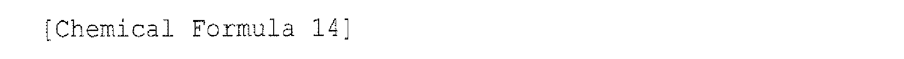 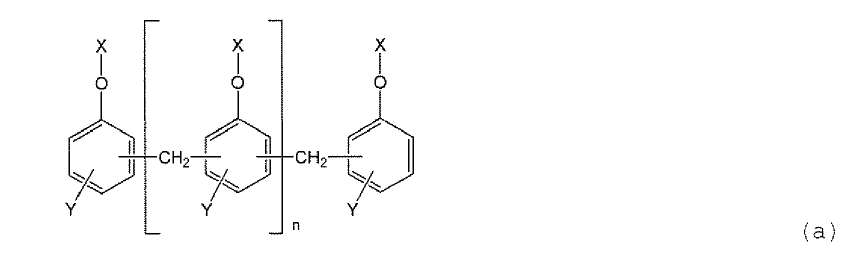 (wherein, n represents an integer of 1 or more, X represents a group represented by a following formula (I), (II) or (III), the Xs of (n+2) times in a formula may be the same or different, provided that at least one of all X in an epoxy resin composition is a group represented by the aforementioned formula (I) or (II) and at least one is a group represented by the aforementioned formula (III), Y represents -H or -CH₃, and the Ys of (n+2) times in the formula may be the same or different); 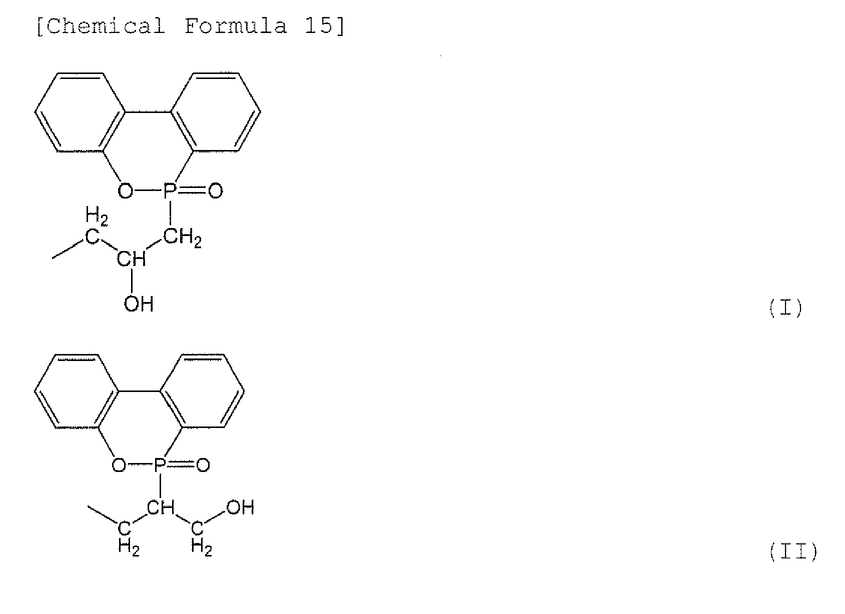 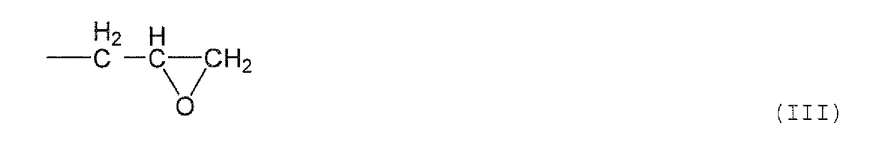 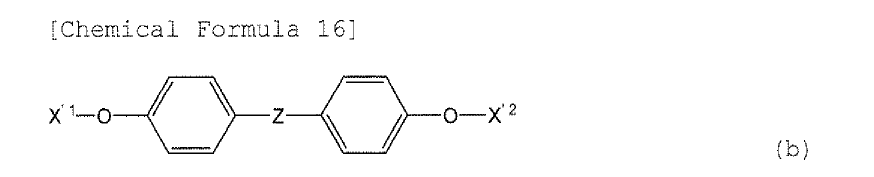 (wherein, X'¹ and X'² each independently represent a group represented by the aforementioned formula (I), (II) or (III), provided that at least one of all X'¹ and X'² in the epoxy resin composition is a group represented by the aforementioned formula (I) or (II) and at least one is a group represented by the aforementioned formula (III), and Z represents -CH₂-, -C(CH₃)₂- or -SO₂-).

3. An epoxy resin composition comprising as essential components thereof:
(A) a phosphorous-containing epoxy resin composed of a compound (a) represented by a following formula (a),
(C) a novolak-type epoxy resin,
(F) a trisphenolmethane-type epoxy resin, and
(D) an epoxy resin curing agent: 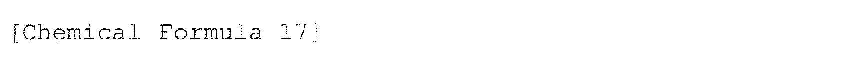 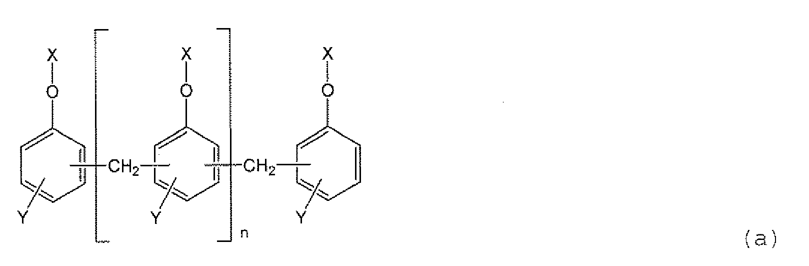 (wherein, n represents an integer of 1 or more, X represents a group represented by a following formula (I), (II) or (III), the Xs of (n+2) times in the formula may be the same or different, provided that at least one of all X in the epoxy resin composition is a group represented by the aforementioned formula (I) or (II) and at least one is a group represented by the aforementioned formula (III), Y represents -H or -CH₃, and the Ys of (n+2) times in a formula may be the same or different);

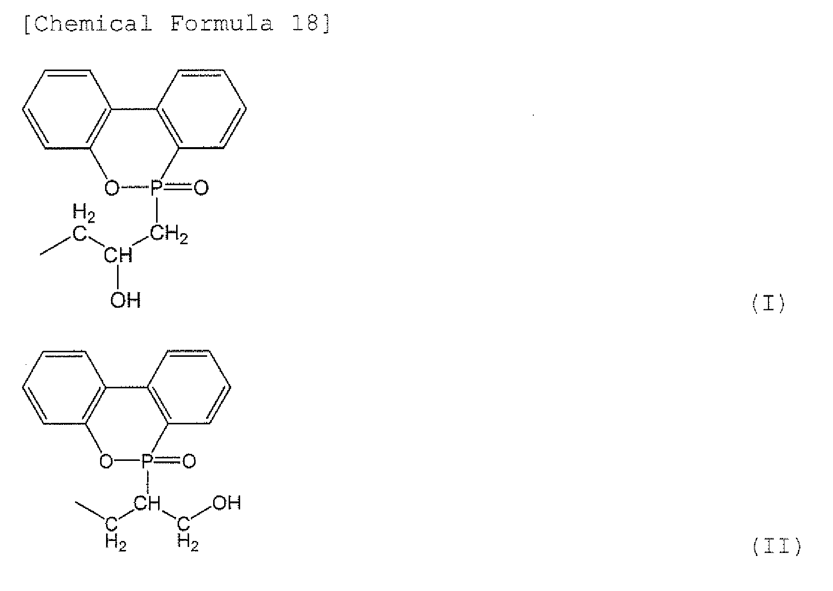

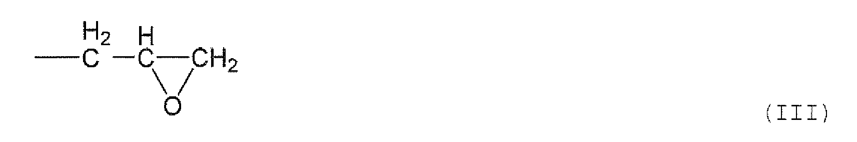

4. The epoxy resin composition according to any one of claims 1 to 3, wherein a blended amount of the phosphorous-containing epoxy resin (A) is 10% by mass to 50% by mass based on a total mass of the epoxy resin composition.

5. The epoxy resin composition according to claim 1 or 2, wherein a blended amount of the phosphorous-containing epoxy resin (A) is 19% by mass to 50% by mass based on a total mass of the epoxy resin composition.

6. The epoxy resin composition according to claim 1 or 2, wherein the blended amount of the phosphorous-containing epoxy resin (A) is 19% by mass to 31% by mass based on a total mass of the epoxy resin composition.

7. The epoxy resin composition according to claim 3, wherein a blended amount of the phosphorous-containing epoxy resin (A) is 15% by mass to 30% by mass based on a total mass of the epoxy resin composition.

8. The epoxy resin composition according to claim 3, wherein a blended amount of the phosphorous-containing epoxy resin (A) is 17% by mass to 25% by mass based on a total mass of the epoxy resin composition.

9. The epoxy resin composition according to claim 1 or 2, wherein a blended amount of the phosphorous-containing epoxy resin (A) is 35% by mass to 60% by mass based on a value of 100% for a total amount of other epoxy resin other than the phosphorous-containing epoxy resin (A) contained in the epoxy resin composition.

10. The epoxy resin composition according to claim 3, wherein a blended amount of the phosphorous-containing epoxy resin (A) is 15% by mass to 40% by mass based on a value of 100% for a total amount of other epoxy resin other than the phosphorous-containing epoxy resin (A) contained in the epoxy resin composition.

11. The epoxy resin composition according to claim 3, wherein a blended amount of the phosphorous-containing epoxy resin (A) is 17% by mass to 31% by mass based on a value of 100% for a total amount of other epoxy resin other than the phosphorous-containing epoxy resin (A) contained in the epoxy resin composition.

12. A prepreg obtained by impregnating the epoxy resin composition according to claim 1 into a carbon fiber.

13. A fiber-reinforced composite material obtained by curing a prepreg obtained by impregnating the epoxy resin composition according to claim 1 into a carbon fiber.

14. A fiber-reinforced composite material obtained by curing a prepreg obtained by impregnating the epoxy resin composition according to claim 1 into a carbon fiber, wherein flame resistance when formed into a molded sheet having a thickness of 0.6 mm is V-0 in UL-94V.

15. A fiber-reinforced composite material obtained by curing a prepreg obtained by impregnating the epoxy resin composition according to claim 1 into a carbon fiber, wherein flame resistance when formed into a resin sheet having a thickness of 2 mm is V-0 or V-1 in UL-94V.

16. A fiber-reinforced composite material obtained by curing a prepreg obtained by impregnating the epoxy resin composition according to claim 1 into a carbon fiber, wherein flame resistance when formed into a resin sheet having a thickness of 2 mm is V-0 in UL-94V.

17. A prepreg obtained by impregnating the epoxy resin composition according to claim 2 into a carbon fiber.

18. A prepreg obtained by impregnating the epoxy resin composition according to claim 3 into a carbon fiber.

19. A fiber-reinforced composite material obtained by curing a prepreg obtained by impregnating the epoxy resin composition according to claim 2 into a carbon fiber.

20. A fiber-reinforced composite material obtained by curing a prepreg obtained by impregnating the epoxy resin composition according to claim 3 into a carbon fiber.

21. A fiber-reinforced composite material obtained by curing a prepreg obtained by impregnating the epoxy resin composition according to claim 2 into a carbon fiber, wherein flame resistance when formed into a molded sheet having a thickness of 0.6 mm is V-0 in UL-94V.

22. A fiber-reinforced composite material obtained by curing a prepreg obtained by impregnating the epoxy resin composition according to claim 3 into a carbon fiber, wherein flame resistance when formed into a molded sheet having a thickness of 0.6 mm is V-0 in UL-94V.

23. A fiber-reinforced composite material obtained by curing a prepreg obtained by impregnating the epoxy resin composition according to claim 2 into a carbon fiber, wherein flame resistance when formed into a resin sheet having a thickness of 2 mm is V-0 or V-1 in UL-94V.

24. A fiber-reinforced composite material obtained by curing a prepreg obtained by impregnating the epoxy resin composition according to claim 3 into a carbon fiber, wherein flame resistance when formed into a resin sheet having a thickness of 2 mm is V-0 or V-1 in UL-94V.

25. A fiber-reinforced composite material obtained by curing a prepreg obtained by impregnating the epoxy resin composition according to claim 2 into a carbon fiber, wherein flame resistance when formed into a resin sheet having a thickness of 2 mm is V-0 in UL-94V.

26. A fiber-reinforced composite material obtained by curing a prepreg obtained by impregnating the epoxy resin composition according to claim 3 into a carbon fiber, wherein flame resistance when formed into a resin sheet having a thickness of 2 mm is V-0 in UL-94V.
